# EUROPÄISCHE PATENTSCHRIFT

(11) **EP 2 394 330 B1**
(45) Veröffentlichungstag und Bekanntmachung des Hinweises auf die Patenterteilung: **23.04.2014**
(21) Anmeldenummer: 09805697.1
(22) Anmeldetag: 15.12.2009
(51) Int. Cl.: H01M 10/52

(54) **BATTERIEMODUL**
BATTERY MODULE
MODULE DE BATTERIE

(30) Priorität: 06.02.2009 DE 102009000660
(43) Veröffentlichungstag der Anmeldung: 14.12.2011
(73) Patentinhaber: Robert Bosch GmbH, 70442 Stuttgart (DE)
(72) Erfinder: WAHL, Thomas, 75181 Pforzheim (DE); WAHL, Florian, 97816 Lohr (DE); SCHWEGLER, Leonore, 70374 Stuttgart (DE); SCHUMANN, Bernd, 71277 Rutesheim (DE)
(86) Internationale Anmeldenummer: PCT/EP2009/067134
(87) Internationale Veröffentlichungsnummer: WO 2010/089000

(56) Entgegenhaltungen:
- US-A- 4 048 387

## Beschreibung

Die vorliegende Erfindung betrifft ein Batteriemodul gemäß dem Oberbegriff der Ansprüche 1 und 11, ein Batteriemodulsystem gemäß dem Oberbegriff des Anspruches 14 und ein Kraftfahrzeug.

### Stand der Technik

Batterien, z. B. Lithiumionenbatterien oder Zebra-Batterien, versorgen verschiedene Einrichtungen, z. B. Kraftfahrzeuge, Krankenhäuser oder Bohrmaschinen, mit elektrischem Strom. Im Allgemeinen werden mehrere Batterien in einem Gehäuse eingebaut und bilden dadurch ein Batteriemodul. Batteriemodule haben den Vorteil, dass diese leichter mit einem Kühlfluid gekühlt und höhere elektrische Leistungen durch die Kombination mehrerer Batteriemodule zu einem Batteriemodulsystem einfach realisiert werden können.

In Batterien, z. B. Lithium-Ionen-Batterien, entstehen bei Störungen, z. B. bei einem Brand oder einem sogenannten thermal runaway, Gase oder Dämpfe, welche zu einem Überdruck im gasdichten Gehäuse der Batterie führen können. Um ein Platzen der Batterie zu verhindern, werden mittels eines Überdruckventils die Gase oder Dämpfe durch eine Entgasungsleitung in die Umgebung der Batterie geleitet. Die austretenden Gase und Dämpfe sind normerweise sehr giftig, so dass diese in der Umgebung Schäden verursachen können. Insbesondere können dadurch in nachteiliger Weise auch Menschen gesundheitlich beeinträchtigt werden.

Batterien, bei denen giftige Gase entfernt werden können, sind beispielsweise aus der US 4 048 387 A bekannt. Die US 4 048 387 A nennt einen Absorber zur Entfernung von Katalysatorgiften aus in Akkumulatorbatterien entstehenden Knallgasgemischen. Bei den Katalysatorgiften handelt es sich um Wasserstoffverbindungen aus der 5. Hauptgruppe des Periodensystems, insbesondere des Arsens und Antimons aus den beim Betrieb von Akkumulatorbatterien entweichenden Knallgasgemischen. Weiterhin nennt die US 4 048 387 A ein Herstellungsverfahren des entsprechenden Absorbers und eine Vorrichtung zur Anwendung dieses Absorbers in Verbindung mit einem Katalysator an einer Akkumulatorenbatterie zur katalytischen Rekombination der im Betrieb von Akkumulatoren entstehenden Wasserstoff- und Sauerstoffgase zu Wasser und Rückführung in den Akkumulator.

### Offenbarung der Erfindung

### Vorteile der Erfindung

Ein erfindungsgemäßes Batteriemodul, insbesondere für ein Kraftfahrzeug, umfasst ein Gehäuse, wenigstens eine in dem Gehäuse angeordnete Batterie, wenigstens eine Einrichtung zum Ableiten von Gasen oder Dämpfen aus der wenigstens einen Batterie, wobei die wenigstens eine Einrichtung mit wenigstens einem Mittel zum Ausscheiden wenigstens eines giftigen und/oder umweltschädlichen Stoffes aus den Gasen oder Dämpfen versehen ist. Die giftigen oder umweltschädlichen Stoffe gelangen damit nicht in die Umwelt, wo diese insbesondere Menschen gefährden können, weil diese vor dem Ausleiten ausgeschieden bzw. abgetrennt werden. Ein Batteriemodul kann auch eine Batterie mit wenigstens einer Einrichtung zum Ableiten von Gasen oder Dämpfen aus der wenigstens einen Batterie sein. Insbesondere sind die giftigen und/oder umweltschädlichen Stoffe ein Gas bzw. Gase oder Dampf.

In einer weiteren Ausgestaltung umfasst das wenigstens eine Mittel wenigstens ein Adsorptionsmaterial. Das Adsorptionsmaterial kann giftige oder umweltschädliche Stoffe leicht adsorbieren, so dass ein einfaches Mittel zum Ausscheiden zur Verfügung steht.

In einer Variante umfasst das wenigstens eine Adsorptionsmaterial Aktivkohle und/oder wenigstens ein anorganisches Adsorptionsmaterial, z. B. Zeolithe, Alumophosphat oder γ-Aluminiumoxid (γ-Al₂O₃).

In einer zusätzlichen Ausführungsform ist die spezifische Oberfläche des wenigstens einen Adsorptionsmaterials größer als 50 m²/g, insbesondere größer als 100 m²/g.

Vorzugsweise ist das wenigstens eine Adsorptionsmaterial mit Verbindungen oder Stoffen mit einer polaren Atombindung, z. B. Ammine, versehen. Dadurch wird das Adsorptionsvermögen für polare gasförmige Verbindungen erhöht.

In einer ergänzenden Ausgestaltung umfasst die wenigstens eine Einrichtung wenigstens eine Entgasungsleitung und ein Überdruckventil je an einer der wenigstens einen Batterie oder eine Entgasungsleitung und ein Überdruckventil für das gesamte Batteriemodul.

In einer weiteren Ausführungsform ist eine Innenseite der wenigstens einen Entgasungsleitung mit dem wenigstens einen Adsorptionsmaterial versehen. Es wird damit kein zusätzliches Bauteil zur Aufnahme des Adsorptionsmaterials benötigt, weil das Adsorptionsmaterial an der Innenseite der ohnehin vorhandenen Entgasungsleitung angebracht wird.

In einer Variante mündet die wenigstens einen Entgasungsleitung in eine Kammer zum Durchleiten der Gase oder Dämpfe und in der Kammer ist Adsorptionsmaterial angeordnet, wobei vorzugsweise das Volumen pro Längeneinheit der Kammer größer ist bei der wenigstens einen Entgasungsleitung. Bei einer vollständig mit Adsorptionsmaterial gefüllten Kammer müssen die gesamten Gase oder Dämpfe durch das Adsorptionsmaterial strömen, so dass die giftigen oder umweltschädlichen Stoffe besonders gut, insbesondere vollständig oder nahezu vollständig, abgeschieden werden können.

In einer ergänzenden Ausgestaltung ist die wenigstens eine Entgasungsleitung spiralförmig ausgebildet. Die Länge der Entgasungsleitung wird damit erhöht und damit auch die Adsorptionsleistung.

In einer weiteren Ausführungsform ist die wenigstens eine Batterie fluiddicht in dem Gehäuse angeordnet und/oder die Batterie ist eine Lithiumionenbatterie ist.

Ein erfindungsgemäßes Batteriemodul, insbesondere für ein Kraftfahrzeug, umfasst ein Gehäuse, wenigstens eine in dem Gehäuse angeordnete Batterie, wenigstens eine Einrichtung zum Ableiten von Gasen oder Dämpfen aus der wenigstens einen Batterie, wobei die wenigstens eine Einrichtung mit einem Auffangbehälter zum Speichern der Gase oder Dämpfe versehen ist.

Zweckmäßig steht der Auffangbehälter vor einer Verwendung zum Speichern der Gase oder Dämpfe unter Vakuum. Insbesondere ist der Auffangbehälter mit einem Absperrorgan, z. B. einer Membran oder einem Ventil, fluidleitend mit der Entgasungsleitung verbindbar.

In einer zusätzlichen Ausgestaltung ist der Auffangbehälter zum Speichern der Gase oder Dämpfe unter einen Druck von wenigstens 1 bar, z. B. mittels eines Verdichters, setzbar.

In einer weiteren Ausgestaltung umfasst die wenigstens eine Batterie eine positiv ladbare Elektrode und eine negativ ladbare Elektrode.

In einer Variante ist das Mittel eine verfahrenstechnische Anlage zum Ausscheiden oder Abbrennen von giftigen oder umweltschädlichen Stoffen.

Ein erfindungsgemäßes Batteriemodulsystem umfasst wenigstens ein in dieser Anmeldung beschriebenes Batteriemodul.

Ein erfindungsgemäßes Kraftfahrzeug umfasst ein in dieser Anmeldung beschriebenes Batteriemodul und/oder ein in dieser Anmeldung beschriebenes Batteriemodulsystem.

### Kurze Beschreibung der Zeichnungen

Im Nachfolgenden werden drei Ausführungsbeispiele der Erfindung unter Bezugnahme auf die beigefügten Zeichnungen näher beschrieben. Es zeigt:
- Fig. 1: eine schematisierte Querschnitt eines Batteriemoduls in einer ersten Ausführungsform,
- Fig. 2: das Batteriemodul gemäß Fig. 1 in einer zweiten Ausführungsform,
- Fig. 3: das Batteriemodul gemäß Fig. 1 in einer dritten Ausführungsform,
- Fig. 4: einen Längsschnitt eines Batteriemodulsystems und

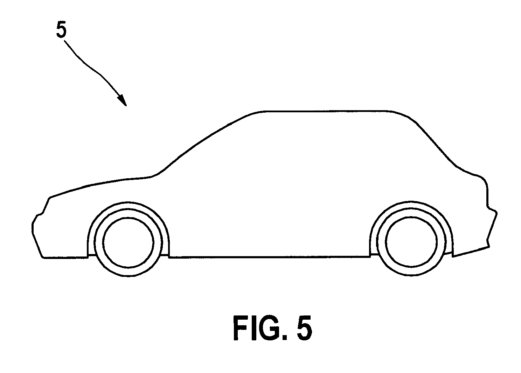

- Fig. 5: eine stark schematisierte Ansicht eines Kraftfahrzeuges.

### Ausführungsformen der Erfindung

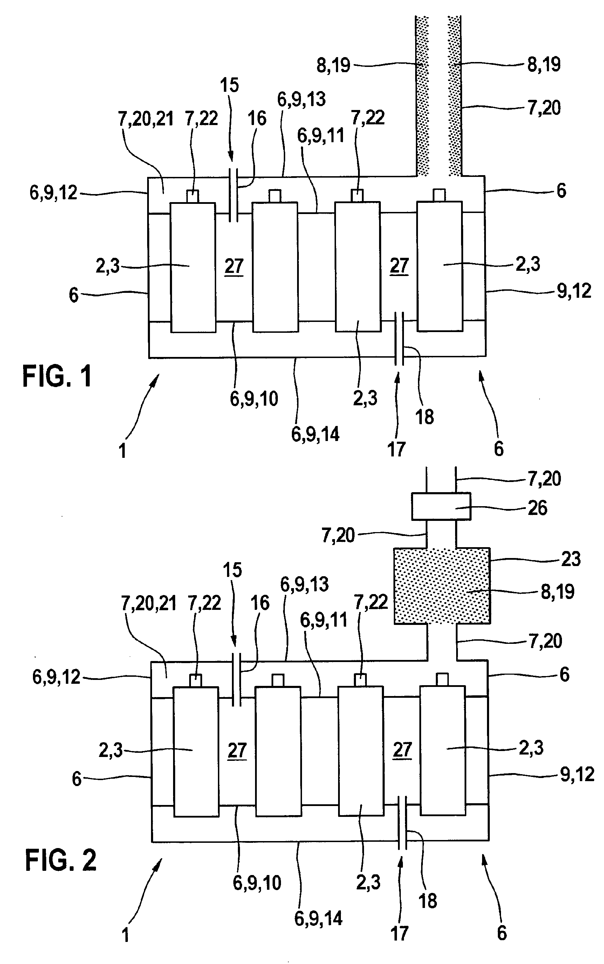

In Figur 1 ist ein erfindungsgemäßes Batteriemodul 1 zur Aufnahme von acht als Lithiumionenbatterien 3 ausgebildeten Batterien 2 in einem schematisierten Querschnitt dargestellt. Ein von Wandungen 9 gebildete Gehäuse 6 verfügt über vier Seitenwandungen 12, eine Bodenwandung 10 und eine Deckwandung 11 (Fig. 1 bis 3). Die Länge des Batteriemoduls beträgt 12 cm, die Breite 7 cm und die Höhe 10 cm. Durch eine Einlassöffnung 15 einer Einlassleitung 16 an der Deckwandung 11 wird Luft als Kühlfluid in einen Innenraum 27 des Gehäuses 6 geleitet. Analog ist eine Auslassleitung 18 mit einer Auslassöffnung 17 an der Bodenwandung 10 ausgebildet Das Gehäuse 6 besteht aus Metall oder Kunststoff. Die Luft wird mittels eines Gebläses oder eines Ventilators (nicht dargestellt) in die Einlassöffnung 15 der Einlassleitung 16 eingeleitet und strömt am Ende der Einlassleitung 16 in den Innenraum 27 ein. Die in das Gehäuse 6 eingeleitete Luft strömt am Ende der Auslassleitung 18 wieder aus dem Gehäuse heraus.

In den Lithiumionenbatterien 3 können bei Störungen, insbesondere einem Brand, Gase oder Dämpfe entstehen. Um ein Explodieren oder Leckagen an den Lithiumionenbatterien 3 zu vermeiden, werden ab einem bestimmten Druck in den Batterien 2 von einem Überdruckventil 22 an den Batterien 2 die Gase oder Dämpfe in einen Sammelraum 21 eingeleitet. Der Sammelraum 21 wird von einer oberen Deckwandung 13, einem Teil der Seitenwandung 12 und der Deckwandung 11 gebildet und stellt eine Entgasungsleitung 20 dar, weil durch den Sammelraum 21 auch die Gase und Dämpfe abgeleitet werden (Fig. 1 bis 3). Die Boden- und Deckwandung 10, 11 sind mit acht kreisförmigen Ausnehmungen versehen, in denen die acht Lithiumionenbatterien 3 angeordnet sind (nicht dargestellt). Unterhalb der Bodenwandung 10 ist eine untere Bodenwandung 14 angeordnet. Dabei ist der Innenraum 27, durch den das Kühlfluid geleitet wird, fluiddicht von dem Sammelraum 21 abgetrennt. Der Sammelraum 21 mündet in die Entgasungsleitung 20 zum Ableiten der Gase oder Dämpfe in die Umgebung bzw. Umwelt. Die Entgasungsleitung 20, der Sammelraum 21 und das Überdruckventil 22 sind somit Einrichtungen 7 zum Ableiten von Gasen oder Dämpfen aus den Batterien 2.

In Fig. 1 ist ein erstes Ausführungsbeispiel für ein Mittel 8 zum Ausscheiden von giftigen oder umweltgefährlichen Stoffen aus den Gasen oder Dämpfen dargestellt. Eine Innenseite der Entgasungsleitung 20 ist mit Aktivkohle als Adsorptionsmaterial 19 versehen. Die Aktivkohle adsorbiert giftige oder gefährliche Stoffe aus den aus den Batterien 2 austretenden Gasen vor dem Ableiten in die Umgebung, so dass diese giftigen Stoffe nicht die Umwelt gefährden können. Bei einem Überdruck in wenigstens einer Batterie 2 öffnet wenigstens ein Überdruckventil 22. Die Gase oder Dämpfe strömen durch das Überdruckventil 22 aus der wenigstens einen Batterie 2 in den Sammelraum 21 und vom Sammelraum 21 durch die Entgasungsleitung 20 in die Umgebung. Das Adsorptionsmaterial 19 adsorbiert dabei beim Durchströmen der Entgasungsleitung 20 die giftigen Stoffe, so dass in die Umgebung keine oder nahezu keine giftigen Stoffe gelangen.

In einem zweiten Ausführungsbeispiel wird eine Kammer 23 als Mittel 8 zum Ausscheiden von giftigen oder umweltgefährlichen Stoffen aus den Gasen oder Dämpfen verwendet (Fig. 2). Die Kammer 23 ist Bestandteil der Entgasungsleitung 20, so dass die Gase und Dämpfe durch die Kammer 23 strömen. Die Kammer 23 weist hierzu eine erste Öffnung zum Einleiten der Gase oder Dämpfe aus der Entgasungsleitung 20 in die Kammer 23 und eine zweite Öffnung zum Ausleiten der Gase oder Dämpfe aus der Kammer 23 in die Entgasungsleitung 20 auf. Die Kammer 23 ist, vorzugsweise vollständig, mit dem Adsorptionsmaterial 19 gefüllt. Als Adsorptionsmaterial 19 werden z. B. Zeolithe und/oder Aktivkohle verwendet, das mit Verbindungen oder Stoffen mit einer polaren Atombindung, beispielsweise Ammine, versehen ist, um das Adsorptionsvermögen für polare gasförmige Verbindungen bzw. Stoffe zu erhöhen. Ein Rückschlagventil 26 in der Entgasungsleitung 20 in Strömungsrichtung nach der Kammer 23 verhindert, dass keine Gase, Flüssigkeiten oder Feststoffe von außen in die Entgasungsleitung 20 und damit das Batteriemodul 1 gelangen können. Das Rückschlagventil 26 öffnet bei einem Überdruck von mindestens 350 mbar in der Entgasungsleitung 20 gegenüber der Umgebung. Dies entspricht einem Überdruck, der sich bei einer Temperaturerhöhung um 100 K bezogen auf eine Ausgangstemperatur von 20° C in dem Batteriemodul 1 einstellt. Das Rückschlagventil 26 soll bevorzugt nicht bei Druckschwankungen öffnen, die eine Folge normaler Temperatur- oder Druckschwankungen sind.

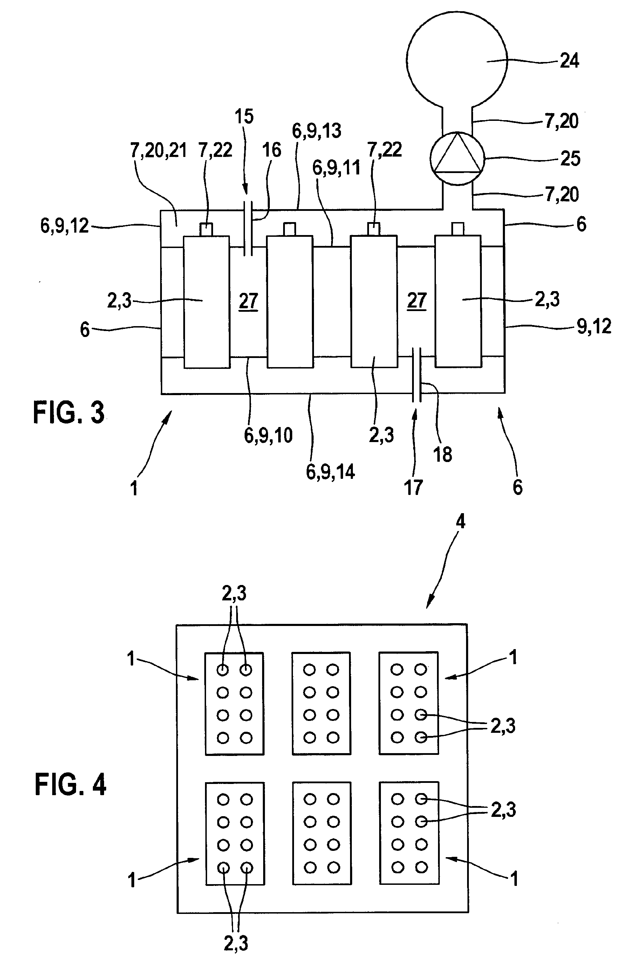

In Fig. 3 ist ein drittes Ausführungsbeispiel dargestellt. Die durch die Entgasungsleitung 20 geleiteten Gase oder Dämpfe werden von einem Auffangbehälter 24 aufgenommen oder gespeichert, so dass diese nicht in die Umwelt gelangen. Ein Verdichter 25 erhöht den Druck in dem Auffangbehälter 24 auf einen Bereich zwischen 2 oder 20 bar, um einen größere Menge an Gasen oder Dämpfen in dem Auffangbehälter 24 pro Volumeneinheit aufnehmen zu können. Nach dem Einleiten der Gase oder Dämpfe in den Auffangbehälter 24 kann mittels eines nicht dargestellten Sensors das Gas oder die Dämpfe in dem Auffangbehälter 24 erfasst und anschließend kann von einer Steuerungseinheit (nicht dargestellt) eine entsprechende Meldung ausgegeben werden. Darauf folgend können die Gase oder Dämpfe aus dem Auffangbehälter 24 entsorgt werden ohne die Umwelt zu belasten. Der Auffangbehälter 24 kann auch als ein dehnbarer Ballon ausgebildet sein.

In einem vierten, nicht dargestellten Ausführungsbeispiel steht der Auffangbehälter 24 vor der Speicherung der Gase oder Dämpfe unter Vakuum. In der Entgasungsleitung 20, welche die Gase oder Dämpfe von dem Sammelraum 21 zu dem Auffangbehälter 24 leitet, ist eine Membran angeordnet. Die Überdruckventile 22 sind mit Sensoren ausgestattet, welche ein Öffnen eines Überdruckventiles 22 erkennen. Bei einem Öffnen eines Überdruckventiles 22 wird das Öffnen zu einer Steuerungseinheit gemeldet, welche das Durchtrennen der Membran, z. B. mechanisch oder elektrisch durch Erwärmen und Schmelzen der Membran, indem durch die Membran Strom geleitet wird, veranlasst. Aufgrund des Vakuums in dem Auffangbehälter 24 werden die Gase oder Dämpfe aus dem Sammelraum 21 angesaugt.

Mehrere Batteriemodule 1 können auch zu einem erfindungsgemäßen Batteriemodulsystem 4 verbunden werden (Fig. 4). Die Einlass- und Auslassöffnungen 15, 17 der einzelnen Batteriemodule 1 werden zu einer zentralen Luftzufuhr, z. B. einem Ventilator, parallel geschaltet (nicht dargestellt). In einem Batteriemodulsystem, beispielsweise für ein Kraftfahrzeug 5, mit 6 Batteriemodulen 1 mit je 8 Lithiumionenbatterien 3 befinden sich somit 48 Lithiumionenbatterien 3. Der modulare Aufbau gestattet damit eine bessere Skalierbarkeit, weil mit den identischen Batteriemodulen 1 unterschiedliche elektrische Leistungen für verschiedene Anwendungen einfach realisiert werden können.

Die Einzelheiten der verschiedenen Ausführungsbeispiele können miteinander kombiniert werden, sofern nichts Gegenteiliges erwähnt wird.

Insgesamt betrachtet sind mit der erfindungsgemäßen Batteriemodul 1 wesentliche Vorteile verbunden. Die bei einer Störung aus den Batterien 2 austretende Gase oder Dämpfe mit giftigen oder umweltschädlichen Stoffen gelangen nicht mehr in die Umgebung, so dass insbesondere Menschen hiervon nicht mehr gefährdet sind.

## Patentansprüche

1. Batteriemodul (1), insbesondere für ein Kraftfahrzeug (5), umfassend
- ein Gehäuse (6),
- wenigstens eine in dem Gehäuse (6) angeordnete Batterie (2), wenigstens eine Einrichtung (7) zum Ableiten von Gasen oder Dampfen aus der wenigstens einen Batterie (2),
die wenigstens eine Einrichtung (7) mit wenigstens einem Mittel (8) zum Ausscheiden wenigstens eines giftigen und/oder umweltschädlichen Stoffes aus den Gasen oder Dämpfen versehen ist, wobei das wenigstens eine Mittel (8) wenigstens ein Adsorptionsmaterial (19) umfasst,
**dadurch gekennzeichnet, dass**
das wenigstens eine Adsorptionsmaterial (19) mit Verbindungen oder Stoffen mit einer polaren Atombindung, insbesondere Ammine, versehen ist.

2. Batteriemodul nach Anspruch 1,
**dadurch gekennzeichnet, dass**
die spezifische Oberfläche des wenigstens einen Adsorptionsmaterials (19) größer als 50 m²/g, insbesondere größer als 100 m²/g, ist.

3. Batteriemodul nach einem der vorhergehenden Ansprüche,
**dadurch gekennzeichnet, dass**
die wenigstens eine Einrichtung (7) wenigstens eine Entgasungsleitung (20) und ein Überdruckventil (22) je an einer der wenigstens einen Batterie (2) umfasst.

4. Batteriemodul nach Anspruch 3,
**dadurch gekennzeichnet, dass**
eine Innenseite der wenigstens einen Entgasungsleitung (20) mit dem wenigstens einen Adsorptionsmaterial (19) versehen ist.

5. Batteriemodul nach Anspruch 3 oder 4,
**dadurch gekennzeichnet, dass**
die wenigstens einen Entgasungsleitung (20) in eine Kammer (23) zum Durchleiten der Gase oder Dämpfe mündet und in der Kammer (23) Adsorptionsmaterial (19) angeordnet ist, wobei vorzugsweise das Volumen pro Längeneinheit der Kammer (23) größer ist bei der wenigstens einen Entgasungsleitung (20).

6. Batteriemodul nach einem oder mehreren der Ansprüche 3 bis 5,
**dadurch gekennzeichnet, dass**
die wenigstens eine Entgasungsleitung (20) spiralförmig ausgebildet ist.

7. Batteriemodul nach einem oder mehreren der vorhergehenden Ansprüche,
**dadurch gekennzeichnet, dass**
die wenigstens eine Batterie (2) fluiddicht in dem Gehäuse (6) angeordnet ist und/oder die Batterie (2) eine Lithiumionenbatterie (3) ist.

8. Batteriemodulsystem (4) mit mehreren Batteriemodulen (1),
**dadurch gekennzeichnet, dass**
das Batteriemodulsystem (4) wenigstens ein Batteriemodul (1) gemäß einem oder mehreren der Ansprüche 1 bis 13 umfasst.

9. Kraftfahrzeug (5),
**dadurch gekennzeichnet, dass**
das Kraftfahrzeug (5) eine Batteriemodul (1) gemäß einem oder mehrerer der Ansprüche 1 bis 13 und/oder ein Batteriemodulsystem (4) gemäß Anspruch 14 umfasst.

## Claims

1. Battery module (1), in particular for a motor vehicle (5), comprising
- a housing (6),
- at least one battery (2) arranged in the housing (6),
- at least one device (7) for the discharge of gases or vapours out of the at least one battery (2),
which at least one device (7) is provided with at least one means (8) for the separation of at least one toxic and/or environmentally harmful substance out of the gases or vapours, the at least one means (8) comprising at least one adsorption material (19),
**characterized in that**
the at least one adsorption material (19) is provided with compounds or substances having a polar atomic bond, in particular amines.

2. Battery module according to Claim 1,
**characterized in that**
the specific surface of the at least one adsorption material (19) is larger than 50 m²/g, in particular larger than 100 m²/g.

3. Battery module according to one of the preceding claims,
**characterized in that**
the at least one device (7) comprises at least one degassing line (20) and one pressure relief valve (22) in each case on one battery of the at least one battery (2).

4. Battery module according to Claim 3,
**characterized in that**
an inner face of the at least one degassing line (20) is provided with the at least one adsorption material (19).

5. Battery module according to Claim 3 or 4, **characterized in that**
the at least one degassing line (20) issues into a chamber (23) for the passage of the gases or vapours and adsorption material (19) is arranged in the chamber (23), preferably the volume per unit length of the chamber (23) being larger than in the at least one degassing line (20).

6. Battery module according to one or more of Claims 3 to 5,
**characterized in that**
the at least one degassing line (20) is of spiral form.

7. Battery module according to one or more of the preceding claims,
**characterized in that**
the at least one battery (2) is arranged, fluidtight, in the housing (6), and/or the battery (2) is a lithium ion battery (3).

8. Battery module system (4) having a plurality of battery modules (1),
**characterized in that**
the battery module system (4) comprises at least one battery module (1) according to one or more of Claims 1 to 13.

9. Motor vehicle (5),
**characterized in that**
the motor vehicle (5) comprises a battery module (1) according to one or more of Claims 1 to 13 and/or a battery module system (4) according to Claim 14.

## Revendications

1. Module de batterie (1), en particulier pour un véhicule automobile (5), comprenant
- un boîtier (6),
- au moins une batterie (2) disposée dans le boîtier (6),
- au moins un dispositif (7) pour évacuer des gaz ou des vapeurs hors de l'au moins une batterie (2),
l'au moins un dispositif (7) étant pourvu d'au moins un moyen (8) pour séparer au moins une substance toxique et/ou nuisible à l'environnement des gaz ou des vapeurs, l'au moins un moyen (8) comprenant au moins un matériau d'adsorption (19), **caractérisé en ce que**
l'au moins un matériau d'adsorption (19) est pourvu de composés ou de substances ayant une liaison atomique polaire, en particulier des amines.

2. Module de batterie selon la revendication 1, **caractérisé en ce que**
la surface spécifique de l'au moins un matériau d'adsorption (19) est supérieure à 50 m²/g, en particulier est supérieure à 100 m²/g.

3. Module de batterie selon l'une quelconque des revendications précédentes,
**caractérisé en ce que**
l'au moins un dispositif (7) comprend au moins une conduite de dégazage (20) et une soupape de surpression (22) respectives au niveau de l'une de l'au moins une batterie (2).

4. Module de batterie selon la revendication 3, **caractérisé en ce**
**qu'**un côté intérieur de l'au moins une conduite de dégazage (20) est pourvu de l'au moins un matériau d'adsorption (19).

5. Module de batterie selon la revendication 3 ou 4, **caractérisé en ce que**
l'au moins une conduite de dégazage (20) débouche dans une chambre (23) pour conduire les gaz ou les vapeurs et un matériau d'adsorption (19) est disposé dans la chambre (23), le volume par unité de longueur de la chambre (23) étant de préférence supérieur au niveau de l'au moins une conduite de dégazage (20).

6. Module de batterie selon l'une quelconque ou plusieurs des revendications 3 à 5,
**caractérisé en ce que**
l'au moins une conduite de dégazage (20) est réalisée en spirale.

7. Module de batterie selon l'une quelconque ou plusieurs des revendications précédentes, **caractérisé en ce que**
l'au moins une batterie (2) est disposée de manière étanche aux fluides dans le boîtier (6) et/ou la batterie (2) est une batterie lithium-ion (3).

8. Système de modules de batterie (4) comprenant plusieurs modules de batterie (1),
**caractérisé en ce que**
le système de modules de batterie (4) comprend au moins un module de batterie (1) selon l'une quelconque ou plusieurs des revendications 1 à 13.

9. Véhicule automobile (5),
**caractérisé en ce que**
le véhicule automobile (5) comprend un module de batterie (1) selon l'une quelconque ou plusieurs des revendications 1 à 13, et/ou un système de modules de batterie (4) selon la revendication 14.
